# EUROPÄISCHE PATENTSCHRIFT

(11) **EP 2 109 018 B1**
(45) Veröffentlichungstag und Bekanntmachung des Hinweises auf die Patenterteilung: **23.05.2012**
(21) Anmeldenummer: 08154204.5
(22) Anmeldetag: 08.04.2008
(51) Int. Cl.: G05B 5/01, G05B 11/36

(54) **Digitaler Regelkreis mit Tiefpasscharakteristik**
Digital control circuit with low-pass characteristic
Circuit régulateur numérique ayant des caractéristiques de passe bas

(43) Veröffentlichungstag der Anmeldung: 14.10.2009
(73) Patentinhaber: ELMOS Semiconductor AG, 44227 Dortmund (DE)
(72) Erfinder: Abaza, Fikret, 47169 Duisburg (DE); Feucht, Christian, 44359 Dortmund (DE)
(74) Vertreter: von Kreisler Selting Werner

(56) Entgegenhaltungen:
- DE-A1- 19 912 974
- US-A1- 2004 232 868

## Beschreibung

Die Erfindung betrifft einen digitalen Regelkreis mit Tiefpasscharakteristik, bei dem die Rückführgröße, die die zu regelnde Größe repräsentiert, als analoges elektrisches Signal vorliegt.

Digitale Regelkreise, bei denen der Sollwert als digitales Signal vorliegt, sind grundsätzlich bekannt. Sofern die Regelgröße als analoges Signal vorliegt, ist eine Analog-Digital-Wandlung erforderlich, was den schaltungstechnischen Aufwand erhöht und die Eigenschaften des digitalen Regelkreises negativ beeinflussen kann.

Regelkreise mit Analog-Digital-Wandlern zur Signalverarbeitung sind z. B. aus DE-A-199 12 974 und US-A-2004/0232868 bekannt.

Aufgabe der Erfindung ist es daher, einen digitalen Regelkreis mit Tiefpasscharakteristik zu schaffen, der über verbesserte Eigenschaften verfügt.

Zur Lösung dieser Aufgabe wird mit der Erfindung ein digitaler Regelkreis mit Tiefpasscharakteristik vorgeschlagen, der versehen ist mit
- einem Digitalsollwertgeber zur Vorgabe eines digitalen Sollwertsignals,
- einem digitalen Regler, der in Abhängigkeit von einer Regeldifferenz zwischen dem digitalen Sollwertsignal und einem digitalen Istwertsignal ein Stellglied ansteuert, welches eine Regelstrecke beeinflusst,
- einem Sensor zur Erfassung einer Regelgröße der Regelstrecke und zur Ausgabe eines den Istwert der Regelgröße repräsentierenden analogen Ausgangssignals, und
- einem Analog-Digital-Konverter zur Umwandlung des analogen Ausgangssignals des Sensors in ein digitales Istwertsignal,
- wobei der Analog-Digital-Konverter als Delta-Sigma-Modulator ausgebildet ist, der das analoge Ausgangssignal des Sensors in ein Bitstrom-Signal umsetzt, aus welchem zusammen mit dem Signal des Digitalsollwertgebers die Regeldifferenz gebildet wird.

Die Besonderheit des erfindungsgemäßen digitalen Regelkreises besteht in der Ausbildung des Analog-Digital-Konverters zur Umwandlung der analogen, als elektrisches Signal vorliegenden Regelgröße in ein digitales Istwertsignal als Delta-Sigma-Modulator. Ein derartiger Delta-Sigma-Modulator ist Bestandteil eines Delta-Sigma-Wandlers, der neben dem Modulator auch noch einen Tiefpassfilter aufweist. Erfindungsgemäß wird nun für die Analog-Digital-Wandlung nicht ein vollständiger Delta-Sigma-Wandler, sondern nur dessen Modulator verwendet. Die durch die Tiefpassfilterung realisierte Mittelwertbildung erfolgt erfindungsgemäß unter zur Hilfenahme der Tiefpasscharakteristik des digitalen Reglers.

Der Delta-Sigma-Modulator erzeugt ein Bitstrom-Signal, das auf den vorgegebenen Wertebereich des Sollwerts skaliert ist, wobei der Wertebereich durch den maximal möglichen Sollwert MAX und den minimal möglichen Sollwert MIN definiert ist. Die Differenz beider Signale wird als Regelabweichung dem digitalen Regler zugeführt. Die bei Delta-Sigma-Wandlern erforderliche Mittelwertbildung erfolgt erfindungsgemäß durch das Tiefpassverhalten des digitalen Reglers und wird erfindungsgemäß auf die Regeldifferenz angewendet.

Der Vorteil des erfindungsgemäßen digitalen Regelkreises ist in dem Einsatz des Delta-Sigma-Modulators in der Rückkopplungsschleife zu sehen. Delta-Sigma-Modulatoren lassen sich mit moderatem Aufwand mit sehr hoher Genauigkeit realisieren. Hingegen ist bei einer Realisierung mit einem herkömmlichen Analog-Digital-Wandler die Genauigkeit durch dessen Auflösung beschränkt, so dass sehr aufwendige Konstruktionen für eine hohe Genauigkeit erforderlich sind. Der Aufwand bezieht sich auf die Chipfläche und den Zeitaufwand für die Kalibrierung beim Bauteiltest. Um Störungen außerhalb des Abtastfrequenzbereichs zu unterdrücken, erfordert ein herkömmlicher Analog-Digital-Wandler (beispielsweise ein Parallelwandler wie z.B. ein sukzessiver Approximationswandler) ein steilflankiges Tiefpassfilter (sogenanntes Antialiasing-Filter) mit niedriger Grenzfrequenz, während für einen Delta-Sigma-Modulator lediglich ein einfaches Tiefpassfilter genügt. Das Filter kann somit auf dem Chip integriert werden, so dass externe Komponenten eingespart werden können. Mithin lässt sich also der Delta-Sigma-Modulator auf einfache Art und Weise in beispielsweise einem ASIC integrieren, wobei die erforderliche Chipfläche nur relativ gering sein muss.

Wird die Regelstrecke über einen Pulsweitenmodulator angesteuert, so enthält die Regelgröße Signalanteile bei Vielfachen der Modulatorfrequenz. Ein Filter vor dem Analog-Digital-Wandler muss diese Anteile unterdrücken, um eine korrekte, vom Abtastzeitpunkt unabhängige Signalerfassung zu gewährleisten. Der Phasengang dieses Filters kann leicht die Stabilität des Regelkreises verschlechtern. Das einfache Tiefpassfilter vor dem Delta-Sigma-Modulator kann bei den in den meisten Applikationen vorliegenden Verhältnissen so dimensioniert werden, dass keine schädliche Phasenverschiebung auftritt und trotzdem das Signal bei allen Pulsweiten fehlerfrei erfasst wird, und zwar insbesondere dann, wenn die Abtastung bei einem ganzzahligen Vielfachen der Modulatorfrequenz erfolgt. Wenn also zwischen dem digitalen Regler und dem Stellglied ein mit einer Modulatorfrequenz betreibbarer Pulsweitenmodulator angeordnet ist, so reicht es in vorteilhafter Weiterbildung der Erfindung aus, wenn zwischen dem Sensor und dem Delta-Sigma-Wandler des erfindungsgemäßen digitalen Regelkreises ein Tiefpassfilter zum Herausfiltern von bei der Modulatorfrequenz und bei Vielfachen der Modulatorfrequenz liegenden Signalanteilen angeordnet ist.

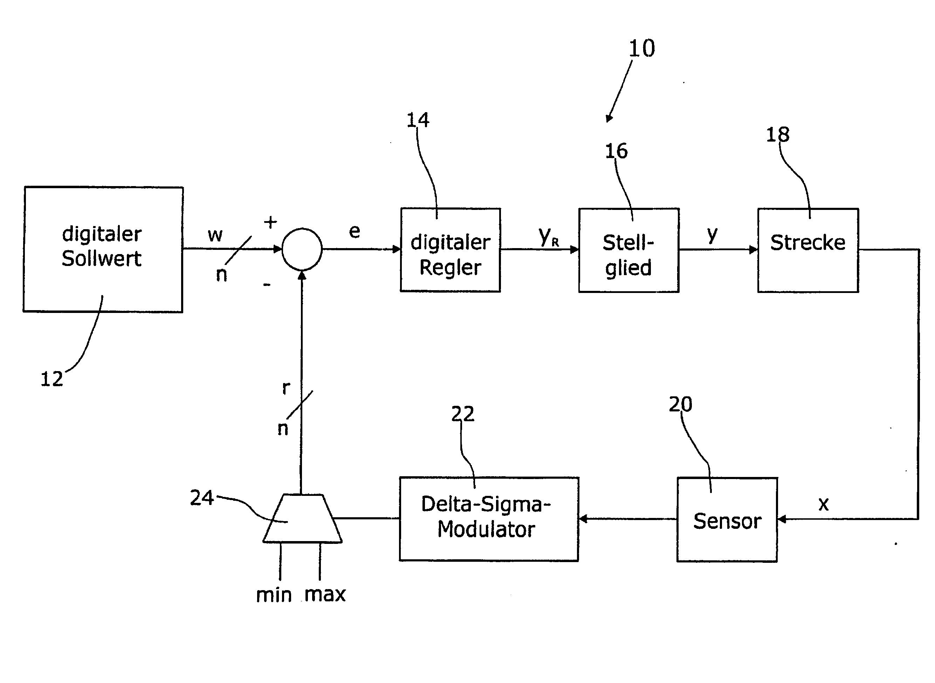

Die Erfindung wird nachfolgend anhand eines Ausführungsbeispiels und unter Bezugnahme auf die Zeichnung näher erläutert.

In der Zeichnung ist schematisch ein digitaler Regelkreis dargestellt, bei dem ein elektrisches analoges Signal vorliegt, das die Regelgröße repräsentiert. Zur Analog-Digital-Wandlung wird ein Delta-Sigma-Modulator verwendet, dessen 1-Bit-Ausgangssignal mit hoher Abtastrate dem Regler direkt zugeführt wird.

Der digitale Regelkreis 10 weist einen digitalen Sollwertgeber 12 auf, der eine Führungsgröße w vorgibt, die als Digitalwert (n-Bit-Parallelwort) vorliegt und Werte zwischen vorgebbaren MIN- und MAX-Grenzen (Wertebreich) annehmen kann. Die für die Regelkreisdynamik erforderliche Übertragungsfunktion wird mit einem digitalen Regler 14 realisiert, der als Eingangsgröße die Differenz zwischen der Führungsgröße w und einer Rückführgröße r erhält. Die digitale Reglerausgangsgröße y_{R} wird mit einem Stellglied 16 in eine zur Regelstrecke 18 passende Stellgröße y umgesetzt. Mit einem Sensor 20 wird die Regelgröße x in ein elektrisches Signal gewandelt, das im Bedarfsfall von einem Verstärker verstärkt wird. Aus dem Ausgangssignal des Sensors 20 generiert ein Delta-Sigma-Modulator 22 ein 1-Bit-Digitalsignal (Bitstromsignal) mit hoher Abtastrate. Das Bitstromsignal des Delta-Sigma-Modulators 22 wird auf den Wertebereich des Sollwerts (MIN-MAX) skaliert, wozu z. B. ein Multiplexer 24 eingesetzt werden kann; der von dem Bitstromsignal angesteuert wird und an dessen Ausgang ein n-Bit-Parallelwort vorliegt, das bei logisch 1 des Bitstromsignals des Delta-Sigma-Modulators 22 den Wert MAX und bei logisch 0 den Wert MIN aufweist. Das n-Bit-Parallelwort am Ausgang des Multiplexers 24 bildet die Rückführgröße r.

Der erfindungsgemäße digitale Regelkreis kommt zur Anwendung, wenn die für die Regelkreisdynamik erforderliche Übertragungsfunktion Tiefpasscharakteristik hat. Optional kann die Übertragungsfunktion des digitalen Reglers 14 um einen weiteren Tiefpass ergänzt werden, der hochfrequente Anteile außerhalb des regelungstechnisch relevanten Frequenzbereichs unterdrückt. Die Notwendigkeit für diese Maßnahme hängt davon ab, ob Stellglied 16 bzw. Regelstrecke 18 mit den hochfrequenten Signalen beaufschlagt werden können, ohne dass ein nachteiliger Effekt entsteht.

Die Erfindung ist insbesondere dann vorteilhaft, wenn die Zeitkonstante des Reglers 14 sehr groß gegenüber der Abtastfrequenz des Delta-Sigma-Modulators 22 ist, wie es z. B. bei mechanischen, elektromechanischen, hydraulischen, pneumatischen und thermischen Regelstrecken sehr oft der Fall ist. Die digitale Reglerausgangsgröße y_{R} erreicht dann eine hohe Auflösung, der bei entsprechender Konstruktion des Delta-Sigma-Modulators auch eine hohe Genauigkeit gegenüber steht.

## Patentansprüche

1. Digitaler Regelkreis mit Tiefpasscharakteristik, mit
- einem Digitalsollwertgeber (12) zur Vorgabe eines digitalen Sollwertsignals (w),
- einem digitalen Regler (14), der in Abhängigkeit von einer Regeldifferenz (e) zwischen dem digitalen Sollwertsignal (w) und einem digitalen Istwertsignal (r) ein Stellglied (16) ansteuert, welches eine Regelstrecke (18) beeinflusst,
**gekennzeichnet durch**
- einen Sensor (20) zur Erfassung einer Regelgröße (x) der Regelstrecke (18) und zur Ausgabe eines den Istwert der Regelgröße (x) repräsentierenden analogen Ausgangssignals und
- einen Analog-Digital-Konverter zur Umwandlung des analogen Ausgangssignals des Sensors (20) in ein digitales Istwertsignal (r),
- wobei das digitale Sollwertsignal (w) ein Bitstrom-Signal ist und
- wobei der Analog-Digital-Konverter als Delta-Sigma-Modulator (22) ausgebildet ist, der das analoge Ausgangssignal des Sensors (20) in ein Bitstrom-Signal umsetzt, aus welchem zusammen mit dem Bitstrom-Signal des Digitalsollwertgebers (12) die Regeldifferenz (e) gebildet wird.

2. Digitaler Regelkreis nach Anspruch 1, **dadurch gekennzeichnet, dass** zwischen dem digitalen Regler (14) und dem Stellglied (16) ein mit einer Modulatorfrequenz betreibbarer Pulsweitenmodulator angeordnet ist und dass zwischen dem Sensor (20) und dem Delta-Sigma-Modulator (22) ein Tiefpassfilter zum Herausfiltern von bei der Modulatorfrequenz und bei Vielfachen der Modulatorfrequenz liegenden Signalanteilen im analogen Ausgangssignal des Sensors angeordnet ist.

## Claims

1. A digital control circuit with low-pass characteristic, comprising
- a digital set-value setter (12) for setting a digital set-value signal (w),
- a digital controller (14) operative to control an actuator (16) in dependence on a control difference (e) between a digital set-value signal (w) and a digital actual-value signal (r), said actuator influencing a controlled section (18),
**characterized by**
- a sensor (20) for detecting a controlled variable (x) of the controlled section (18) and for outputting an analog output signal representing the actual value of the controlled variable (x), and
- an analog/digital converter for converting the analog output signal of the sensor (20) into a digital actual-value signal (r),
- said analog/digital converter being designed as a delta-sigma modulator (22) converting said analog output signal of the sensor (20) into a bitstream signal, with the control difference (e) being formed from said bitstream signal and the signal of the set-value setter (12).

2. The digital control circuit according to claim 1, **characterized in that** a pulse-width modulator operable by a modulator frequency is arranged between the digital controller (14) and the actuator (16), and that, between the sensor (20) and the delta-sigma modulator (22), a lowpass filter is arranged for filtering out those signal portions of the analog output signal which have the modulator frequency and a multiple of the modulator frequency.

## Revendications

1. Circuit de régulation numérique à caractéristique de passe-bas comportant
- un émetteur de valeur de consigne numérique (12) servant à émettre un signal numérique de valeur de consigne (w),
- un régulateur numérique (14) qui, en fonction d'une différence de réglage (e) entre le signal numérique de valeur de consigne (w) et un signal numérique de valeur réelle (r), commande un organe de réglage (16) qui agit sur un système réglé (18),
**caractérisé en ce que**
- un capteur (20) servant à détecter une grandeur réglée (x) du système réglé (18) et à émettre un signal de sortie analogique qui représente la valeur réelle de la grandeur réglée (x) et
- un convertisseur analogique-numérique servant à convertir le signal de sortie analogique du capteur (20) en un signal numérique de valeur réelle (r),
- le convertisseur analogique-numérique étant constitué par un modulateur delta-sigma (22) qui transforme le signal de sortie analogique du capteur (20) en un signal composé d'un flux de bits, la différence de réglage (e) étant formée à partir de ce signal et du signal de l'émetteur de valeur de consigne (12).

2. Circuit de régulation numérique selon la revendication 1, **caractérisé en ce qu'**un modulateur de largeur d'impulsions pouvant travailler à une fréquence de modulateur est disposé entre le régulateur numérique (14) et l'organe final (16) et **en ce qu'**un filtre passe-bas destiné à éliminer les fractions du signal de sortie analogique du niveau de la fréquence du modulateur et du niveau de multiples de la fréquence du modulateur est disposé entre le capteur (20) et le modulateur delta-sigma (22).
